# EUROPEAN PATENT APPLICATION

(11) **EP 4 736 620 A1**
(43) Date of publication of application: **06.05.2026**
(21) Application number: 25213206.3
(22) Date of filing: 04.11.2025
(51) Int. Cl.: A01C 7/20, A01B 23/06, A01C 7/08, A01B 21/08, A01B 49/06, A01C 5/06, A01C 7/00

(54) **SEEDING MACHINE**

(30) Priority: 05.11.2024 IT 202400024807
(71) Applicant: S.I.C.iltiller s.r.l., 92016 Ribera (AG) (IT)
(72) Inventor: Palminteri, Samuel, Ribera (AG) (IT)
(74) Representative: Tagliafico, Giulia

(57) **Abstract**

A seeding machine has a plurality of row units (1) suspended from a beam (2) located transverse to the direction of advancement. Each row unit (1) has an upper mounting device (3) and a lower mounting device (4) that extends downwards into shaped parallel plates (7, 8); an arm (11) having a first arm end (12) pivoted in the shaped parallel plates (7, 8) and a second arm end (13) carrying a sleeve (14); a hub (17) carrying a perforated circular plate (18), the hub (17) being locked to the sleeve (14); a clod breaker disc (20) fixed to the perforated circular plate (18); a counteracting elastic element (23) for contrasting the upward rotation of said arm (11); a feed tube (30) for feeding seeds and fertilizing substances, having a free end equipped with a diffuser element (31). Each row unit (1) has a support member (32) for the diffuser element (31), and a disc-cleaning plate (33).

## Description

The invention relates to a seeding machine having a plurality of row units on at least one bar located generally transverse to an advance direction of the seeding machine.

FR2787284A3, EP1731011A1, and US5398771 disclose tool carriers for agricultural machines comprising a suspension device with a wheel in contact with the ground and one or more tool carriers, which are jointly suspended in parallel. In all the cited documents, the suspension device is a parallelogram device. One or more springs are arranged between one of the swinging arms of the suspension device.

This arrangement results in considerable space for each row unit and, consequently, the impossibility of positioning a large number of row units close together.

US 2012/0079973 A1 discloses a furrow opener for an air seeder including a rotatable disc. The opener also includes a vented seed catch pan positioned adjacent one side of the disc. The vented seed catch pan is operably coupled to a seed conduit of the air seeder to receive seed in a pressurized air stream from the seed conduit. The vented catch pan presents a seed inlet configured to receive seed from the seed conduit, a seed outlet positioned to deposit the seed within the furrow, and an elongated chamber extending between the inlet and outlet. The vented catch pan presents multiple vents spaced between the inlet and outlet, with the vents allowing pressurized air flow to escape from the chamber to ambient without passing through the outlet.

It is understood, however, that optimizing soil preparation tools is necessary because soil preparation, for many types of crops, such as wheat and forage, often accounts for half the final cost of the product.

The reduction in the value of agriculture due to climate change requires the combination of a minimum-till disc drill with seeding tools.

The purpose of the present invention is to create a disc drill that allows for improved productivity and economic sustainability, along with a reduced environmental impact.

This and other objectives are achieved by the present invention, which describes a seeding machine having a plurality of row units being suspended from at least one beam located transverse to an advance direction of the seeding machine, each row unit comprising
- an upper mounting device and a lower mounting device, the lower mounting device extending downwards into shaped parallel plates;
- an arm having a first arm end pivoted in said shaped parallel plates of the lower mounting device and a second arm end carrying a sleeve;
- a hub carrying a perforated circular plate, the hub being locked to said sleeve;
- a clod breaker disc fixed to the perforated circular plate by means of bolts;
- a counteracting elastic element for contrasting the upward rotation of the arm;
- a feed tube for seeds and fertilizing substances, having a free end equipped with a diffuser element,

each row unit having a support member for the diffuser element, fixed in the first arm side, and
a disc-cleaning plate being suitable for cleaning said clod breaker disc and being fixed in the second arm side opposite to the support member.

Further features and advantages of the invention will become more apparent from the description of an embodiment of the row unit in a seeding machine, illustrated in the accompanying drawings in which:
- Figure 1 is a perspective view of a seeding machine according to the present invention;
- Figure 2 is a side perspective view, with hidden parts, shown in dotted lines, of a row unit of the seeding machine according to the invention;
- Figure 3 is a side perspective view, rotated 180° from the view in Figure 2 but without the clod breaker disc; and
- Figure 4 is an exploded perspective view of Figure 3, complete with the clod breaker disc.

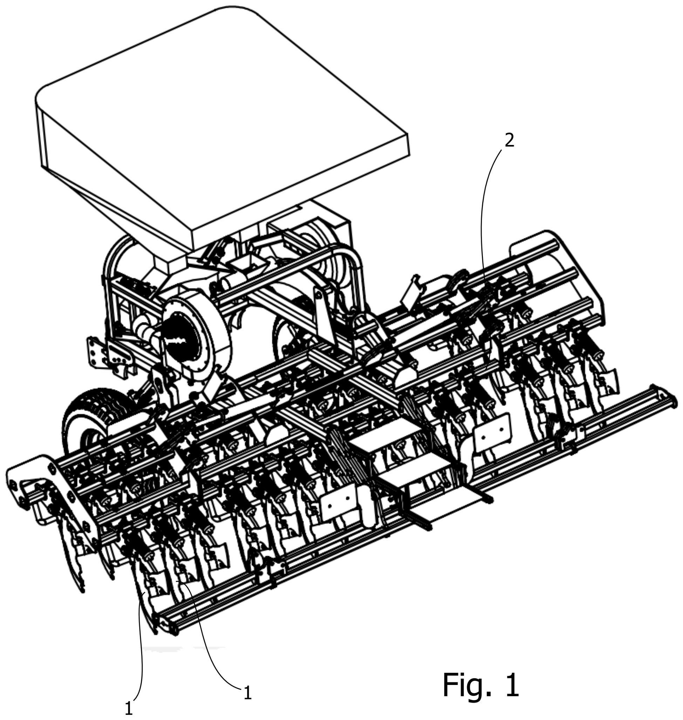

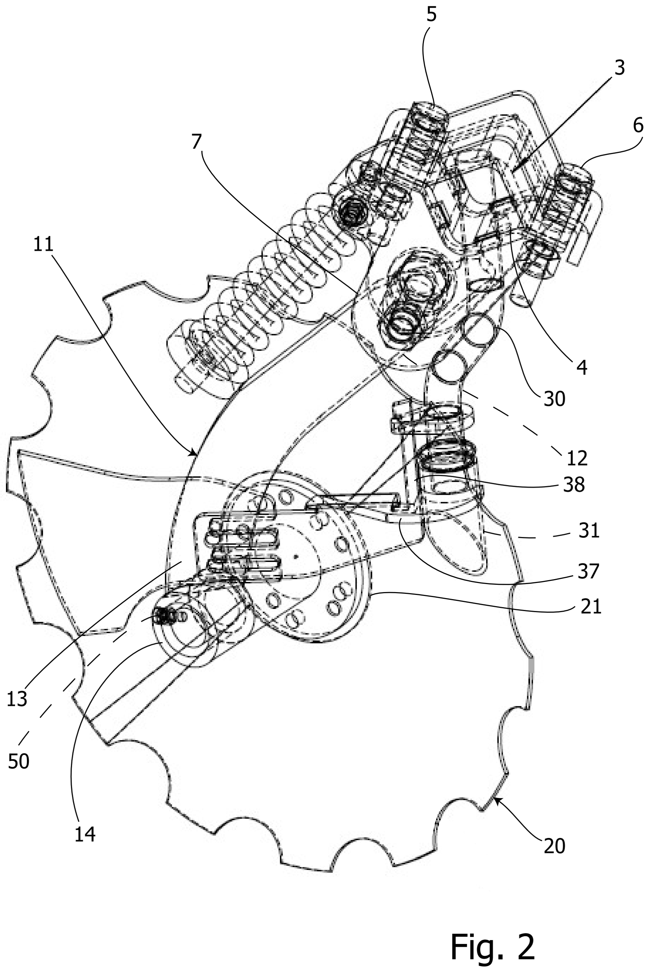

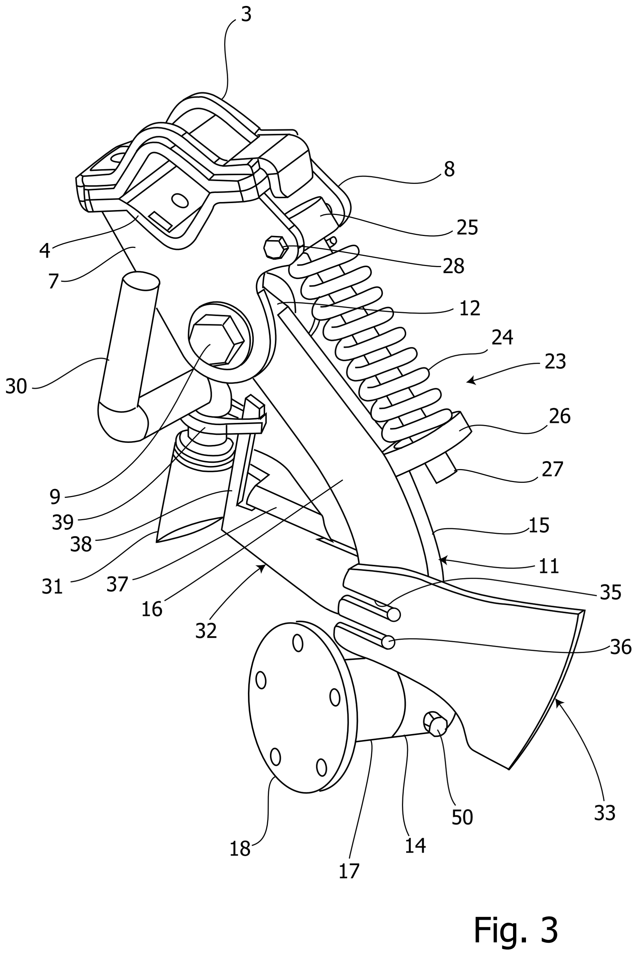

Reference is made initially to Figure 1, which shows row units, generally indicated as 1, mounted in parallel on crossbars, generally indicated as 2, which are located transverse to an advance direction of the seeding machine. Then reference is made to Figures 2 and 3, which are a side perspective view, with hidden parts, shown with dashed lines, of a row unit, and, respectively, a side perspective view, rotated 180° with respect to the view in Figure 2 but without the clod breaker disk.

The row unit includes an upper mounting device 3 and a lower mounting device 4 for attachment to the crossbar 2, not shown in the figures following Figure 1. In the part in contact with the crossbar 2, the upper mounting device 3 and the lower mounting device 4 are shaped like dihedrals that fit with the crossbar 2. The upper mounting device 3 and the lower mounting device 4 are coupled with bolts 5 and 6 (Figure 2). The lower mounting device 4 extends on the opposite side to the upper mounting device 3 with two shaped parallel plates 7, 8. At the bottom, coaxial holes are made in the shaped parallel plates 7, 8 for a bolt 9 with washers. Bolt 9 serves as a pivot for the articulation of an arm 11.

The arm 11 is hinged at its first end 12 by means of the bolt 9 in the two shaped parallel plates 7, 8 of the lower mounting device 4. The arm 11 has a second end 13 carrying a sleeve 14. As can be seen from the figures, the arm 11 has a first side 15 and a second side 16 extending parallel in a vertical direction.

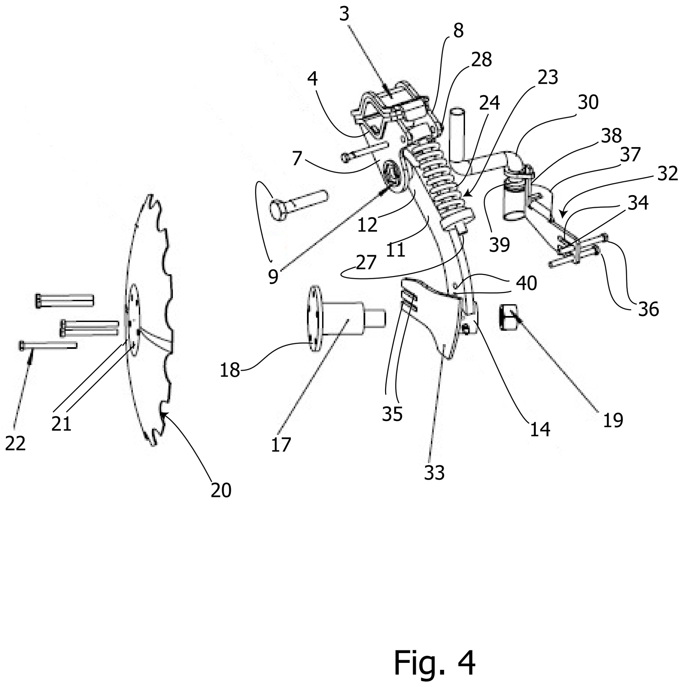

The sleeve 14 supports a hub 17 carrying a perforated circular plate 18. The hub 17 is locked in the sleeve 14 by a grub screw 50 and is tightened with a nut 19, as shown in Figure 4, which is an exploded perspective view of Figure 3.

Figures 2 and 4, as well as Figure 1, show a clod breaker disk 20 for each row unit, equipped with holes 21 corresponding to those in the perforated circular plate 18 of the hub. Bolts 22 pass through holes 21 of the clod breaker disk 20 and the perforated plate 17 to tighten the clod breaker disk 20 to the latter. Furthermore, a counteracting elastic element 23 for contrasting the upward rotation of the arm 11 is pivoted to the shaped parallel plates 7, 8 of the lower mounting device 4 above the first end 12 of the arm 11 around a pin 28. The opposing elastic element 23 is shown in the figures as a spring 24 seated between a proximal abutment 25, crossed by the pin 28, and a distal abutment 26, which is centrally drilled and peripherally welded to the arm 11. As better shown in Figure 3, a spring-guide stem 27 has a proximal end fixed to the proximal abutment 25, and a distal end sliding in the hole of the distal abutment 26. Thanks to the action of the spring 24, compressed between the proximal abutment 25 and the distal abutment 26, the counteracting elastic element 23 contrasts the upward rotation of the arm 11 due to the contact of the clod breaker disc 20 with the soil. In place of the spring 24, positioned between the proximal abutment 25 and the distal abutment 26, it is possible to provide a pneumatic or hydraulic cylinder or other elastic contrast element (not shown), even if these alternatives could be more expensive and less effective.

A feed tube 30 is intended for feeding seeds or fertilizing substances into the soil, or both simultaneously. The feed tube 30, which comes from a hopper shown in Figure 1 but not further described, is partially shown in Figures 2 to 4. The feed tube 30 has a free end equipped with a diffuser element 31, preferably ending in a flute-shaped bevel.

The arm 11 has through holes 40 near the sleeve 14 (Figure 4). Mounted on the first side 15 and the second side 16 of the arm 11, respectively, are a support member 32 and a disc-cleaning plate 33. To this end, the support member 32 preferably has a pair of slots 34, while the disc-cleaning plate 33 has a pair of indentations 35. Bolts 36, passing respectively through the slots 34 of the support member 32, the through holes 40 of the arm 11 and the indentations 35 of the disc-cleaning plate 33, serve to tighten the support member 32 and the disc-cleaning plate 33 in mutually adjustable positions. In practice, the disc-cleaning plate 33, designed to clean the clod breaker disc 20 during tillage, is attached to the second side 16 of the arm 11 opposite the support member 32.

The support member 32 has a lateral connection 37 integral with the diffuser element 31. The support member 32 preferably has an upward-facing finger 38 with a free end connected to a hose clamp 39 that surrounds the feed tube 30.

Minimal tillage leads to increased advantages over traditional plowing techniques, in terms of soil conservation, water savings, reduced operating costs, improved soil fertility, environmental sustainability, and weed management. This practice aligns with the goals of sustainable agriculture capable of addressing contemporary environmental and climate challenges.

The disc seeder using the tools of the present invention provides that the seed feed tube releases the seed before the soil is turned by the clod breaker disc. This offers several advantages: it ensures precision sowing and uniform seed distribution, because the feed tube in front of the disc ensures uniform seed distribution, resulting in more uniform germination and more homogeneous crop growth.

Furthermore, the clod breaker discs, independent of each other, maintain a uniform working depth even on uneven terrain, improving seeding precision and efficiency.

Furthermore, the seed is better protected from atmospheric agents, such as wind and heavy rain, and from birds, as it is immediately covered by the soil freshly turned by the clod breaker discs.

Immediate coverage of the seed with fine soil promotes better germination, thanks to a more stable microclimate and improved moisture retention.

Positioning the feed tube in front of the disc minimizes seed movement, ensuring it remains in the desired location. Adjusting the support member 32 allows the seed release position to be moved closer or further away from the clod breaker disc to adequately contrast adverse weather conditions such as strong winds.

This sowing method also reduces competition between plants for resources, such as water, nutrients, and light, thanks to the uniform spacing of shoots resulting from precise and well-distributed sowing.

All these factors translate into operational efficiency, ensuring fewer subsequent manual interventions to correct any sowing errors.

Furthermore, the ability to operate precisely even at high speeds increases operational efficiency.

The seeding machine according to the present invention, can be used for a wide range of crops, proving versatile for different agricultural needs.

The ability to easily adjust seed depth and distribution allows farmers to adapt the seeder to the specific needs of their crops and soil conditions.

The seeding operation is more efficient and requires less energy than traditional seeding, as the soil is not disturbed more than necessary. This saves fuel and reduces machine wear, resulting in improved yield, crop quality, and agronomic sustainability.

The seeding machine, which uses the inventive row unit, also offers a great option: it can be configured so that the feed tube releases the seed along with the fertilizer, offering additional agronomic and operational advantages. The seeding machine allows seeding and fertilizing the soil in a single pass; the reduced number of passes required saves on labor, fuel, and machine maintenance costs.

Releasing the fertilizer close to the seed improves nutrient availability during the early stages of plant growth and promotes better root development.

Furthermore, by placing the fertilizer directly in the soil close to the seed, losses due to fertilizer volatility are reduced.

In conclusion, an independent disc seeding machine with seed and fertilizer release before the disc passes offers numerous advantages in terms of operational efficiency, seeding quality, and resource optimization, contributing to more sustainable and profitable agricultural production.

## Claims

1. A seeding machine, having a plurality of row units (1) being suspended from at least one beam (2) located transverse to an advance direction of the seeding machine, each row unit (1) comprising:
- an upper mounting device (3) and a lower mounting device (4), both to be retained to the beam (2) by bolts (5, 6), the lower mounting device (4) extending downwards into shaped parallel plates (7, 8),
- an arm (11) having a first arm end (12) pivoted in said shaped parallel plates (7, 8) of the lower mounting device (4) and a second arm end (13) carrying a sleeve (14), said arm (11) having a first arm side (15) and a second arm side (16) extending in parallel in a vertical direction, and
- a hub (17) carrying a perforated circular plate (18), the hub (17) being locked to said sleeve (14) and tightened by a nut (19),
- a clod breaker disc (20) provided with holes (21) corresponding to those of said perforated circular plate (18) and fixed thereto by means of bolts (22),
- a counteracting elastic element (23) for contrasting the upward rotation of said arm (11), the counteracting elastic element (23) being hinged to the shaped parallel plates (7, 8) of the lower mounting device (4) above the first arm end (12),
- a feed tube (30) having a free end equipped with a diffuser element (31), each row unit (1) being **characterized by** further comprising:
a support member (32) for said diffuser element (31), fixed in the first arm side (15), and
a disc-cleaning plate (33) being suitable for cleaning said clod breaker disc (20) and being fixed in the second arm side (16) opposite to said support member (32).

2. The seeding machine according to claim 1, wherein said support member (32) is provided with slots (34) for bolts at said second arm end (13), and the disc-cleaning plate (33) is provided with indentations (35) for an adjusted connection with the support member (32) by bolts (36).

3. The seeding machine according to claim 1, wherein the support member (32) is provided with a retaining finger (38) engaged by a hose clamp (39) to the feed tube (30).

4. The seeding machine according to claim 1, wherein the counteracting elastic element (23) comprises:
- a spring (24) seated between a proximal abutment (25), crossed by a pin (28), and a distal abutment (26), equipped with a central hole and peripherally welded to said arm (11), and
- a spring-guide stem (27) having a proximal end fixed to said proximal abutment (25), and a distal end sliding in said central hole of the distal abutment (26).

5. The seeding machine according to claim 1, wherein the feed tube (30) is intended for at least one between the feeding of seeds and the feeding of fertilizing substances.
